# EUROPEAN PATENT APPLICATION

(11) **EP 4 685 442 A1**
(43) Date of publication of application: **28.01.2026**
(21) Application number: 25190629.3
(22) Date of filing: 21.07.2025
(51) Int. Cl.: G01F 1/84

(54) **SENSOR AND METHOD FOR SENSING**

(30) Priority: 24.07.2024 US 202418782860
(71) Applicant: Airbus Operations Limited, Bristol BS34 7PA (GB)
(72) Inventor: WEST, Archie, Bristol, BS34 7PA (GB)
(74) Representative: Abel & Imray LLP

(57) **Abstract**

A Coriolis flow sensor for sensing a flow of a cryogenic fluid is disclosed having a flow member for the passage of a flow of cryogenic fluid therethrough, a driver for vibrating the flow member, and one or more detectors configured to generate output signals corresponding to Coriolis deflections of the vibrating flow member with flow of cryogenic fluid therethrough. The flow member includes at least 50wt% indium.

## Description

### BACKGROUND OF THE INVENTION

The present disclosure relates to the sensing of flows of cryogenic fluids.

The present invention relates to the sensing of flows of cryogenic fluids. More particularly, but not exclusively, this invention concerns a Coriolis sensor for sensing a flow of a cryogenic fluid. The invention also concerns a flow member for use in such a Coriolis sensor, a fluid gauge, a cryogenic fluid transfer arrangement, a fuel transfer arrangement, a vehicle power arrangement, an aircraft and a method of sensing a flow of a cryogenic fluid.

Sensing flow of cryogenic fluid presents problems because many materials become brittle when they come into contact with the cryogenic fluid. This issue is particularly pronounced at low cryogenic temperatures, such as at 20K, the temperature at which liquid hydrogen is typically maintained to avoid formation of hydrogen gas.

The present invention seeks to mitigate one or more of the above-mentioned problems. Alternatively or additionally, the present invention seeks to provide an improved sensor.

### SUMMARY OF THE INVENTION

In accordance with a first aspect of the present invention, there is provided a Coriolis flow sensor for sensing a flow of a cryogenic fluid, comprising:
a flow member for the passage of a flow of cryogenic fluid therethrough;
a driver for vibrating the flow member; and
one or more detectors configured to generate output signals corresponding to Coriolis deflections of the vibrating flow member with flow of cryogenic fluid therethrough;
wherein the flow member comprises at least 50wt% indium.

The applicant has discovered that it is beneficial to form a flow member from indium. Indium remains ductile at low cryogenic temperatures, such as 20K, the temperature at which liquid hydrogen is typically handled. Indium can therefore be used as a vibrating flow member in a Coriolis sensor. Coriolis sensors are also beneficial in so far as it does not substantially interfere with the flow that it is measuring.

Coriolis flow sensors are known to those skilled in the art. In the absence of fluid flow, the driver causes the flow member to vibrate in a particular (usually very regular) manner. Introduction of a fluid flow through the flow member causes a change to the movement of the flow member. The movement of the flow member is typically more complicated, with twisting movements (Coriolis deflections) being observed, the nature of the "with flow" movements depending on the geometry of the flow member and the direction of the vibrating applied by the driver. This difference in movement is sensed by the one or more detectors, "with flow" movement being differentiable from "without flow" movement.

As mentioned above, the flow member comprises at least 50wt% indium, meaning that at least half of the weight of the flow member is from indium. While it is anticipated that in many cases, substantially pure indium will be used to form the flow member, a flow member comprising a high proportion of indium (at least 50wt% indium) may be suitable. Therefore, optionally, the flow member comprises at least 60wt%, optionally at least 70wt%, optionally at least 80wt%, optionally at least 90wt%, optionally at least 95wt%, optionally at least 98wt%, optionally at least 99wt% indium. Optionally, the flow member is formed from indium. Indium metal typically comprises no more than 100,000ppm impurities, optionally no more than 10,000ppm impurities, optionally no more than 1,000ppm impurities and optionally no more than 100ppm impurities.

The flow member optionally comprises one or more curved regions in the absence of fluid flow and vibration. The flow member may comprise at least one U-shaped portion, for example. Optionally, the flow member may comprise more than one U-shaped portion, for example, two U-shaped portions.

The flow member may optionally be substantially straight in the absence of fluid flow and vibration. Vibration and passage of fluid through the flow member may optionally cause the formation of one or more curves in the flow member.

The flow member optionally comprises at least one channel for the passage of cryogenic fluid therethrough.

The flow sensor optionally comprises more than one detector configured to generate output signals corresponding to Coriolis deflections of the vibrating flow member with flow of cryogenic fluid therethrough. A first detector may be associated with, and/or located proximate to, a first portion of the flow member, and a second detector may be associated with, and/or located proximate to, a second portion of the flow member. The second portion of the flow member is optionally not the first portion of the flow member. The first portion and the second portion of the flow member may be mutually spaced. Alternatively or additionally, both a first and a second detector may be associated with, and/or located proximate to, a first portion of the flow member. For example, a first detector may be associated with and/or located to, a first side of a first portion of the flow member, and a second detector may be associated with, and/or located to, a second side of the first portion of the flow member.

At least one, optionally more than one and optionally each, detector may be configured to sense the position, velocity or acceleration of the flow member. Typically, each detector will be configured to sense the position, velocity or acceleration of a portion of the flow member proximate to the detector. At least one, optionally more than one and optionally each detector optionally comprises a first detector portion that is movable relative to a second detector portion, movement of the first detector portion relative to the second detector portion causing generation of an output signal. For example, the first detector portion may comprise a magnet or a coil, and the second detector portion may comprise the other of the magnet and a coil. Movement of a coil and magnet relative to one another causes generation of an electrical signal in the coil, and therefore such an arrangement may be used to sense movement.

The flow sensor may comprise more than one flow member. For example, the flow sensor may comprise two flow members. One driver may be configured to vibrate more than one flow member. Alternatively, two drivers may be used to vibrate two flow members, a first driver being configured to vibrate a first flow member and a second driver being used to vibrate a second flow member. A first detector may be configured to sense movement of both of the two flow members. A second detector may be configured to sense movement of both of the two flow members. The first detector may be located proximate to a first portion of each of the two flow members. The second detector may be located proximate to a second portion of each of the two flow members. Alternatively or additionally, the sensor may comprise a first set of more than one detector, and a second set of more than one detector, the first set of more than one detector being located proximate to a first portion of each of the two flow members, and the second set of more than one detector being located proximate to a second portion of each of the two flow members.

The flow sensor may be configured to determine whether or not a cryogenic fluid is flowing. The flow sensor may be configured to produce an output indicative of a flow of a cryogenic fluid, for example, in the event that an output of one or more detectors is consistent with Coriolis deflections of the vibrating flow member with flow of cryogenic fluid therethrough. Said output of the flow sensor may optionally be indicative of a flow of a cryogenic fluid, but may not be indicative of the magnitude or direction of the flow of the cryogenic fluid. Optionally, the output of the flow sensor may be indicative of the direction of flow of the cryogenic fluid. Those skilled in the art will realise that it is likely that there will be a *de minimis* flow level below which flow would not be detected i.e. flow is occurring, but it is so small that it is not detectable.

The flow sensor may be configured to determine whether or not a cryogenic fluid is flowing at or above a pre-determined rate. The flow sensor may be configured to produce an output indicative of a flow of a cryogenic fluid at or above a pre-determined rate, for example, in the event that an output of one or more detectors is consistent with Coriolis deflections of the vibrating flow member with flow of cryogenic fluid therethrough at or above a pre-determined rate. Said output of the flow sensor may optionally be indicative of a flow of a cryogenic fluid at or above the pre-determined rate, but may not be indicative of the magnitude or direction of the flow of the cryogenic fluid.

The flow sensor may be configured to determine the magnitude of flow of cryogenic fluid. The flow sensor may be configured to produce an output indicative of the magnitude of flow of a cryogenic fluid, for example, dependent on the output of said one or more detectors. Typically, for example, the magnitude of the Coriolis deflections undergone by the flow member will correlate with increased fluid flow through the flow member, and this is sensed by the one or more detectors. Said output of the flow sensor may optionally be indicative of the magnitude of a flow of a cryogenic fluid, but may or may not be indicative of the direction of the flow of the cryogenic fluid.

The flow sensor may be configured to determine the direction of flow of cryogenic fluid. The flow sensor may be configured to produce an output indicative of a direction of flow of a cryogenic fluid. The output of one or more detectors may optionally be indicative of the direction of flow of cryogenic fluid. Said output of the flow sensor may optionally be indicative of a direction of flow of a cryogenic fluid at or above the pre-determined rate.

The flow sensor may comprise a flow sensor inlet and a flow sensor outlet.

**In** accordance with a second aspect of the present invention, there is provided a flow member for use in the flow sensor of the first aspect of the present invention.

In accordance with a third aspect of the present invention, there is provided a fluid gauge comprising a flow sensor in accordance with the first aspect of the invention. Whereas a flow sensor may be configured to determine a rate of flow of a fluid, a fluid gauge may be configured to determine a volume of fluid, for example, by integrating fluid flow over a period of time. A fluid gauge may be configured to determine a volume of fluid entering or exiting a reservoir.

**In** accordance with a fourth aspect of the present invention, there is provided a cryogenic fluid transfer arrangement comprising a conduit for the transfer of cryogenic fluid and (i) a Coriolis sensor according to the first aspect of the present invention, the Coriolis sensor being configured to sense flow in the conduit for the transfer of cryogenic fluid and/or (ii) a fluid gauge according to the third aspect of the present invention. The Coriolis sensor or the fluid gauge may be in fluid communication with the conduit for the transfer of cryogenic fluid. The Coriolis sensor (or part thereof) or the fluid gauge (or part thereof) may be located in the conduit for the transfer of cryogenic fluid.

In accordance with a fifth aspect of the present invention, there is provided a cryogenic fluid storage arrangement comprising a reservoir for the storage of cryogenic fluid, a conduit in fluid flow communication with the reservoir and (i) a Coriolis sensor in accordance with the first aspect of the present invention, the Coriolis sensor being configured to sense flow in the conduit and/or (ii) a fluid gauge in accordance with the third aspect of the present invention, the fluid gauge optionally being configured to determine the volume of fluid entering or exiting the reservoir. The reservoir may comprise a fuel tank for the storage of cryogenic fluid, such as liquid hydrogen. The cryogenic fluid storage arrangement may therefore comprise a vehicle fuel storage arrangement.

**In** accordance with a sixth aspect of the present invention, there is provided a vehicle comprising a vehicle fuel storage arrangement in accordance with the fourth aspect of the present invention. The vehicle may comprise one or more engines or motors in fluid flow communication with the fuel tank for the storage of cryogenic fluid. The vehicle may optionally be an aircraft, such as a fixed wing aircraft, such as a fixed-wing multi-engine aircraft.

In accordance with a seventh aspect of the present invention, there is provided a method of sensing flow of a cryogenic fluid through a flow member, which flow member is in fluid communication with a source of cryogenic fluid such that, if cryogenic fluid flows, it flows through the flow member, the method comprising:
vibrating the flow member; and
sensing the movement of the flow member;
wherein the flow member comprises at least 50wt% indium.

Sensing the movement of the flow member may optionally comprise sensing one or more of the position, displacement, velocity and acceleration of the flow member.

Sensing the movement of the flow member may optionally comprise sensing one or more of the position, displacement, velocity and acceleration of a portion of the flow member.

The flow member may be configured and/or the flow member may be vibrated such that, in the event that cryogenic fluid flows through the flow member, the flow member will undergo Coriolis deflections. The flow member may be configured and/or the flow member may be vibrated such that, in the event that cryogenic fluid flows through the flow member, the flow member will undergo twisting movement. The method may therefore comprise sensing Coriolis deflections of the flow member. The method may comprise sensing twisting movement of the flow member.

The member used in the method of the seventh aspect of the present invention may comprise one or more of the features of the flow member described above in relation to the Coriolis sensor of the first aspect of the present invention.

The method of the seventh aspect of the present invention may comprise one or more of the features of the Coriolis sensor of the first aspect of the present invention.

The method of the seventh aspect of the present invention may comprise using the Coriolis sensor of the first aspect of the present invention. The method of the seventh aspect of the present invention may therefore comprise providing a Coriolis sensor according to the first aspect of the present invention.

It will, of course, be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying drawings of which:
Figure 1 is a schematic plan view of an example of a Coriolis sensor of a first embodiment of the invention;
Figure 2 shows a schematic side-on view of the sensor of Figure 1;
Figure 3A is a schematic plan view of the sensor of Figure 1 at a first point in time when fluid is flowing through the flow member;
Figure 3B is a schematic plan view of the sensor of Figure 1 at a second point in time when fluid is flowing through the flow member;
Figure 4 is a side-on view of part of a Coriolis sensor of a second embodiment of the invention;
Figure 5 is a schematic plan view of part of the sensor shown in Figure 4;
Figure 6 is a schematic end-on view of part of the sensor shown in Figures 4 and 5;
Figure 7 is a schematic representation of an example of a cryogenic fluid transfer arrangement of another embodiment of the invention;
Figure 8 is a schematic representation of an example of a cryogenic fluid storage arrangement of another embodiment of the invention;
Figure 9 is a schematic representation of an example of a vehicle fuel storage arrangement of another embodiment of the invention;
Figure 10A is a schematic representation of an example of a method of sensing flow of a cryogenic fluid of yet another embodiment of the invention; and
Figure 10B is a schematic representation of an example of a further method of sensing flow of a cryogenic fluid of yet another embodiment of the invention.

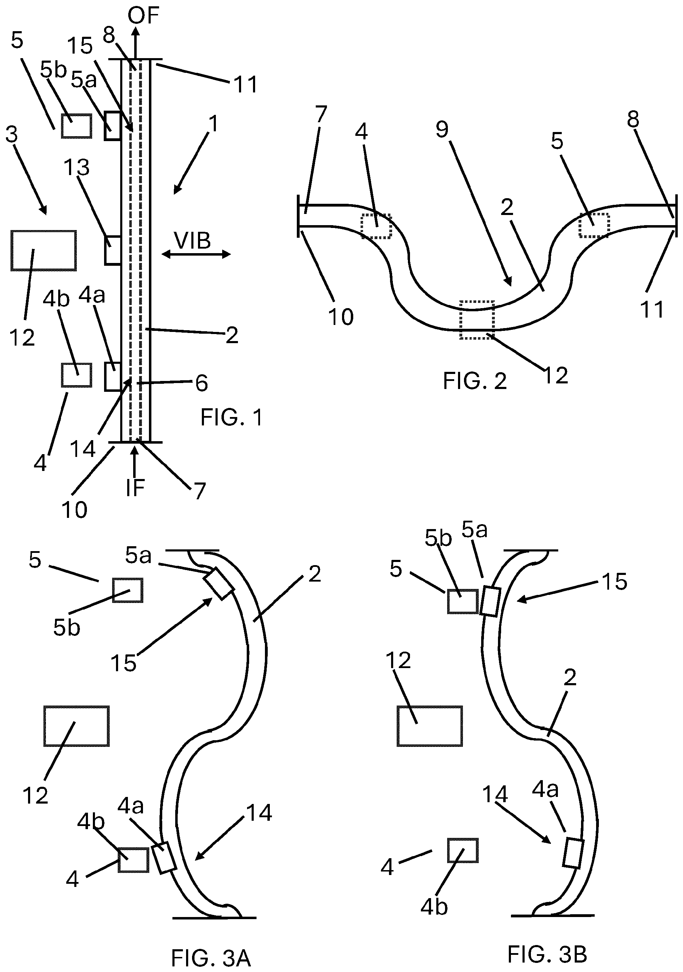

An example of a Coriolis sensor for sensing flow of a cryogenic fluid, such as liquid hydrogen, will now be described by way of example only with reference to Figs. 1, 2, 3A and 3B. The Coriolis sensor is denoted generally by reference numeral 1. Coriolis sensor 1 comprises a flow member 2 for the passage of a flow of cryogenic fluid therethrough. In this connection, flow member 2 comprises a channel 6 which extends from a flow member inlet 7 to a flow member outlet 8. As can be seen from Figure 2, flow member 2 comprises a U-shaped portion 9, and inlets 7 and 8 are at the same horizontal level. Flow member 2 is secured to attachment points 10, 11, one at either end of flow member 2. Coriolis sensor 1 comprises a driver 3 for vibrating flow member 2. In this connection, driver 3 comprises an electromagnet 12. A small magnet 13 is attached to flow member 2, and a coil 12 is electrically-driven to cause movement of the magnet 13 and therefore movement of the flow member 2 in a direction shown by the double headed arrow VIB. Given that flow member 2 is tethered at attachment points 10, 11, flow member 2 undergoes rotatory oscillations in a direction shown by double headed arrow VIB. Coriolis sensor 1 comprises two detector 4, 5 for generating output signals corresponding to Coriolis deflections of the vibrating flow member with flow of cryogenic fluid therethrough. In the present case, detectors 4, 5 are magnetic pick-ups in which a magnet and coil are moved relative to one another, the relative movement of the magnet and coil generating a signal. Magnets 4a, 5a are coupled to flow member 2 so that they move relative to coils 4b, 5b when flow member 2 moves. This relative movement of magnet and coil generates a signal in the wires of the coil, typically a sinusoidal signal.

The flow member 2 is made from indium metal (with a purity of about 99.9%). Indium metal is ductile at 20K, which is the temperature at which liquid hydrogen is handled. Therefore, indium metal may be used to form flow member 2 because indium is sufficiently ductile at 20K to undergo the vibrations of a Coriolis sensor without failing.

The operation of Coriolis sensor 1 will now be described in the absence of any fluid flow through flow member 2. Flow member 2 is vibrated using driver 3. This causes a uniform "swinging" oscillatory motion of flow member 2 in which portion 14 (and therefore magnet 4a) of flow member 2 becomes proximate to coil 4b at the same time as portion 15 (and hence magnet 5a) of flow member 2 becomes proximate to coil 5b. The movement of magnets 4a, 5a relative to the respective coils 4b, 5b are therefore synchronised and in-phase. The output of coils 4b, 5b are therefore in-phase. The generation of in-phase signals by detectors 4, 5 is therefore indicative of no flow through flow member 2.

The operation of Coriolis sensor 1 will now be described when fluid flows through flow member 2, referring to Figs. 1, 2, 3A and 3B. Fluid flow through the flow member 2 while the flow member 2 is being driven by driver 3 causes twisting in flow member 2, shown schematically in Figures 3A and 3B. Those skilled in the art will realise that the twisting shown in Figures 3A and 3B is exaggerated for effect. The twisting of flow member 2 causes detectors 4 and 5 to generate signals that are out of phase with one another. In this connection, the movements of flow member portions 14 and 15 are out of phase with one another. In Fig. 3A, at a first point in time, flow member portion 14 (and therefore magnet 4a) is proximate coil 4b 4, while flow member portion 15 (and therefore magnet 5a) is not, however, proximate coil 5b. In Fig. 3B, at a second point in time after the first point in time shown in Fig, 3A, flow member portion 14 (and therefore magnet 4a) has moved away from coil 4b and flow member portion 15 (and therefore magnet 5a) has moved proximate coil 5b. This out-of-phase movement of magnets 4a, 5a relative to the respective coils 4b, 5b produces sinusoidal signals that are out of phase with one another. The fact that the signals generated by detectors 4, 5 are out of phase in indicative of fluid flow. Furthermore, the magnitude of the phase difference is proportional to the flow rate (mass of flow per unit time).

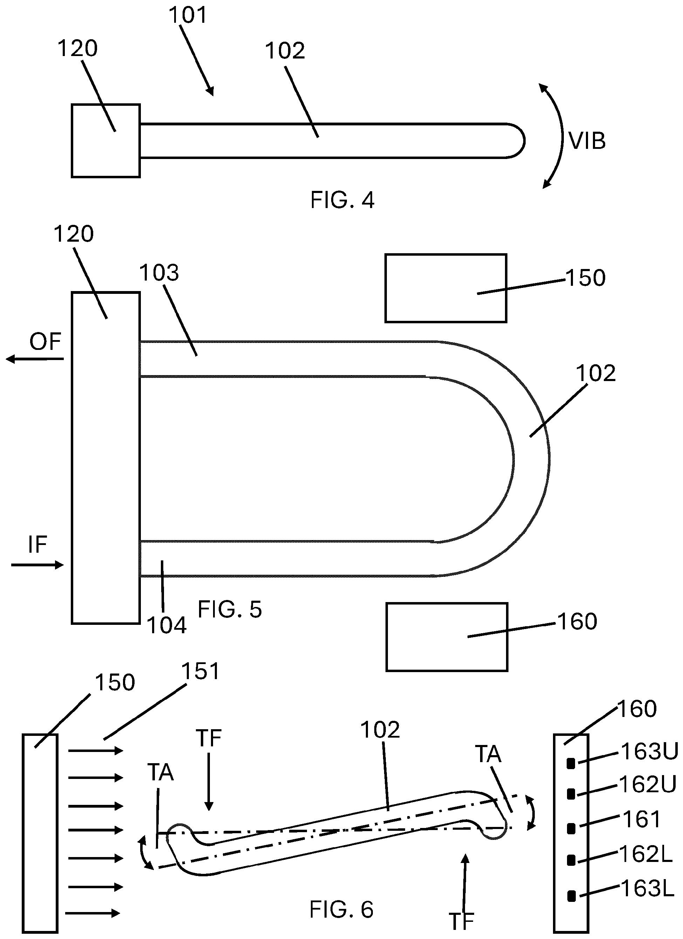

Another example of an embodiment of a Coriolis sensor in accordance with the present invention will now be described with reference to Fig. 4, 5 and 6. The sensor is denoted generally by reference numeral 101 and comprises flow member 102 which has a U-shape as best seen in Fig. 5. Legs 103, 104 of U-shaped flow member 102 are attached to block 120. Block 120 anchors U-shaped flow member 102. Flow member 102 is vibrated by a driver (not shown), with the direction of vibration being shown by the double-headed arrow labelled VIB in Fig. 4. Flow member 102 comprises a channel (not shown) that permits fluid flow through the flow member 102, IF indicating inlet flow and OF indicating outlet flow. In the absence of fluid flow through the flow member 102, flow member 102 undergoes a uniform, regular vibrational motion. When fluid flows through flow member 102 a torsional force TF is exerted on flow member 102 as shown in Fig. 6. This torsional force TF causes twisting of flow member 102 and generates a twist angle TA in flow member 102, which twist angle can be measured. Furthermore, the higher the flow through flow member 102, the higher the twist angel TA. Coriolis 102 can therefore be used to sense for the presence or absence of flow, and may also be used to sense the magnitude of flow. Once again, flow member 102 is formed from indium.

The Coriolis sensor of Figures 4, 5 and 6 may be used to sense the presence of a flow as will now be described. Sensor 101 comprises a collimated light source 150 located on one side of the flow member as shown in Fig. 5 and 6, and a detector 160 comprising an array of light sensing modules, some of which are shown and labelled 161, 162U, 162L, 163U, 163L. The light sensing modules with a U suffix are located above the position of flow member 102 when static, and the light sensible modules with an L suffix are located below the position of flow member 102 when static. Light transmitted by collimated light source 150 is shown schematically by the arrows labelled 151 in Fig. 6, and is received by the light sensing modules, subject to being blocked by flow member 102. If there is no flow in flow member 102 there is no torsion or twisting of flow member 102, and flow member 102 vibrates up and down as shown by arrow VIB in Fig. 4, with no twisting. This means at no point in time will light be prevented from reaching one or more light sensing modules located above the static position of flow member 102 (light sensing modules with a U suffix) and from reaching one or more light sensing modules located below the static position of flow member 102 (light sending modules with an L suffix) at the same point in time. If there is flow in flow member 102, then torsion or twisting of flow member 102 will be observed. If this occurs, then at some point in time light would be prevented from reaching one or more light sensing modules located above the static position of flow member 102 (light sensing modules with a U suffix) and from reaching one or more light sensing modules located below the static position of flow member 102 (light sending modules with an L suffix). For example, light may be prevented from reaching light sensing modules 162U and 162L at the same point in time, thereby indicating the presence of flow through flow member 102. Furthermore, the magnitude of flow through flow member may also be determined. For example, increased flow would provide increased torsion or twisting. In this case, for example, light may be prevented from reaching sensing modules 163L and 163U at the same point in time. This would be indicative of a greater twisting or torsional angle, which is therefore indicative of a greater flow rate through flow member 102.

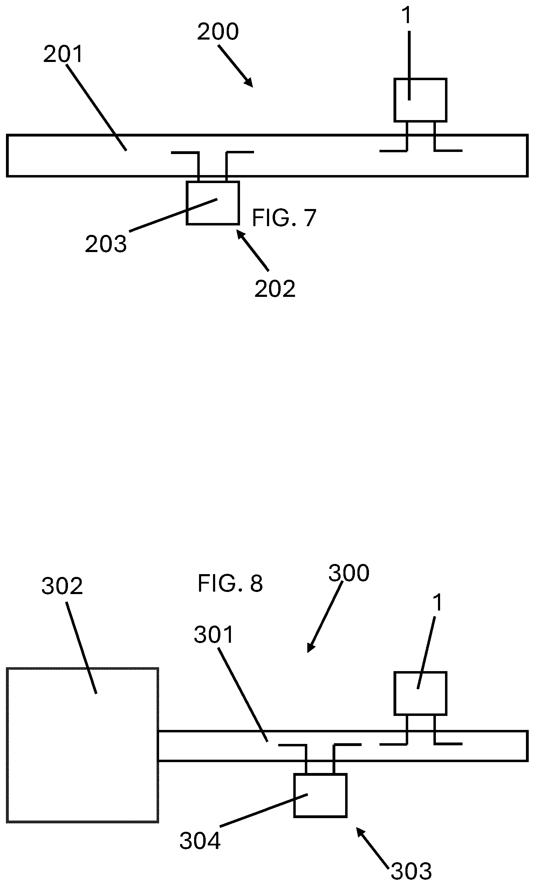

Fig. 7 shows an example of an embodiment of a cryogenic fluid transfer arrangement in accordance with the present invention. The cryogenic fluid transfer arrangement is denoted generally by reference numeral 200 and comprises a conduit 201 for the transfer of cryogenic fluid, a Coriolis sensor 1 as described above and a fluid gauge 202 comprising a second Coriolis sensor 203, the second Coriolis sensor 203 being substantially identical to Coriolis sensor 1 as described above. The Coriolis sensor 1 is configured to sense flow in the conduit 201 for the transfer of cryogenic fluid. Fluid gauge 202 is configured to determine the volume of fluid passing through conduit 201 by integrating, over time, the fluid flow as determined by the second Coriolis sensor 203. Conduit 201 is a vacuum-insulated conduit which is used to carry liquid hydrogen. Those skilled in the art will realise that the cryogenic fluid transfer arrangement need not comprise both a sensor according to the first aspect of the present invention and a fluid gauge in accordance with the third aspect of the invention.

Fig. 8 shows an example of an embodiment of a cryogenic fluid storage arrangement in accordance with the present invention. Cryogenic fluid storage arrangement is denoted generally by reference numeral 300 and comprises a reservoir 302 for the storage of cryogenic fluid in the form of an aircraft fuel tank for the storage of cryogenic fluid, such as liquid hydrogen, a conduit 301 in fluid flow communication with the reservoir, a Coriolis sensor 1 as described above and a fluid gauge 303 comprising a second Coriolis sensor 304 as described above, the second Coriolis sensor 304 being substantially identical to Coriolis sensor 1 as described above. The Coriolis sensor 1 is configured to sense flow in the conduit 301. Fluid gauge 303 is configured to determine the volume of fluid passing through conduit 301 by integrating, over time, the fluid flow as determined by the second Coriolis sensor 304. Fluid gauge 303 may therefore be used to determine the volume of fuel that has been removed from the fuel tank, and may therefore optionally be used to determine the volume of fuel in the fuel tank, if the initial volume of fuel in the fuel tank was known. Those skilled in the art will realise that the cryogenic fluid transfer arrangement need not comprise both a sensor according to the first aspect of the present invention and a fluid gauge in accordance with the third aspect of the invention.

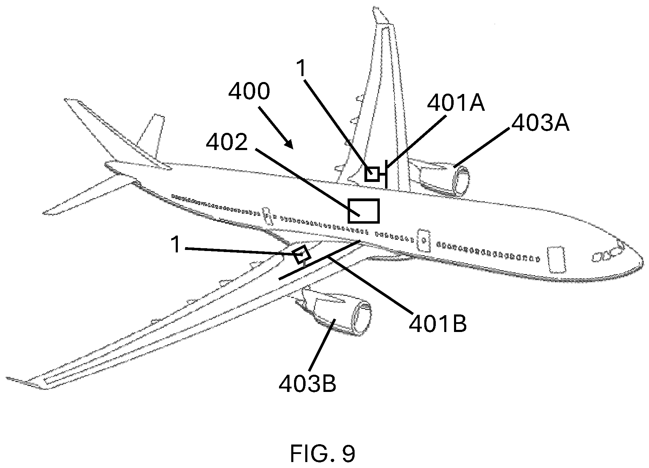

Fig. 9 shows an example of an embodiment of a vehicle comprising a cryogenic fluid storage arrangement, in the form of a vehicle fuel storage arrangement, in accordance with the present invention. The vehicle is a fixed wing twin-engine aircraft and is denoted generally by reference numeral 400. Aircraft 400 comprises a liquid hydrogen fuel tank 402 which is connected to engines 403A, B by a respective fuel delivery conduit 401A, B. Each of fuel delivery conduits 401A, B is provided with a flow sensor 1 as described above.

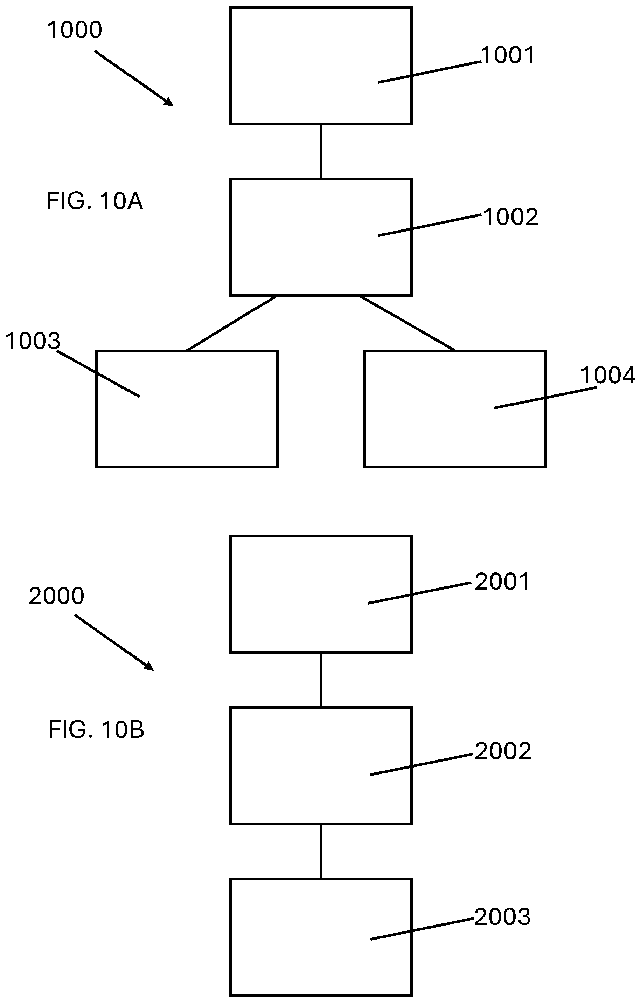

Fig. 10A shows an example of an embodiment of a method of sensing flow of a cryogenic fluid through a flow member. The flow member is in fluid communication with a source of cryogenic fluid such that, if cryogenic fluid flows, it flows through the flow member. The method is denoted generally by reference numeral 1000 and uses Coriolis sensor 1 as described above in relation to Fig. 1, 2, 3A and 3B. Method 1000 comprises vibrating 1001 the flow member and sensing 1002 the movement of the flow member. In this case, the flow member is flow member 2 as described above in relation to Figs. 1, 2, 3A and 3B. The movement of flow member 2 is sensed using detectors 4, 5 as described above. In the absence of flow through flow member 2, there is no twisting of flow member 2, and the output of detectors 4, 5 is indicative 1003 of the absence of flow. In the presence of flow through flow member 2, there is twisting of flow member 2, and the output of detectors 4, 5 is indicative 1004 of the presence of flow.

Fig. 10B shows an example of an embodiment of a method of sensing flow of a cryogenic fluid through a flow member. The flow member is in fluid communication with a source of cryogenic fluid such that, if cryogenic fluid flows, it flows through the flow member. The method is denoted generally by reference numeral 2000 and uses Coriolis sensor 1 as described above in relation to Fig. 1, 2, 3A and 3B. Method 2000 comprises vibrating 2001 the flow member and sensing 2002 the movement of the flow member. In this case, the flow member is flow member 2 as described above in relation to Figs. 1, 2, 3A and 3B. The output of detectors 4, 5 is indicative 2003 of the rate of fluid flow through flow member 2.

The Examples above describe how indium may be used in Coriolis sensors to sense flow of cryogenic fluids, in particular liquid hydrogen. Indium has other uses. For example, when aircraft fuelled by liquid hydrogen are parked, it would be advantageous to connect the fuel tank of the aircraft with a remote venting and/or storage facility so that any liquid hydrogen "boiling-off" or venting from the aircraft fuel tank may be stored or vented at a position remote from the aircraft. Similarly, when fuelling an aircraft with liquid hydrogen, liquid hydrogen will be transferred from a fuelling facility to an aircraft. In order to facilitate such a transfer of hydrogen, pipework and connectors must tolerate temperatures associated with liquid hydrogen. Indium may be used to form seals in couplings and connectors, and the like.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The examples above demonstrate the use of a single flow member. Those skilled in the art will realise that a Coriolis sensor may comprise more than one flow member, such as two flow members.

The examples above demonstrate the use of flow members of various shapes. Those skilled in the art will realise that other shapes of flow members are possible.

The examples above demonstrate a Coriolis sensor suitable for sensing flow of liquid hydrogen. Those skilled in the art will realise that the Coriolis sensor may be suitable for sensing flow of other cryogenic fluids, such as liquid air, liquid nitrogen and liquid oxygen.

The examples above demonstrate the detection of flow of liquid hydrogen. Those skilled in the art will realise that the present invention may also comprise the detection of flow of other cryogenic fluids, such as liquid air, liquid nitrogen and liquid oxygen.

The examples above demonstrate the use of magnetic pick-up detectors comprising a coil and a magnet to sense the movement of the flow member. Those skilled in the art will realise that other detectors may be used. For example, a detector may be used which determines one or more of position, velocity and acceleration.

The examples above demonstrate the use of a coil and magnet to generate vibrations or oscillations of the flow member. Those skilled in the art will realise that there are other possible ways of vibrating or oscillating the flow member.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A Coriolis flow sensor for sensing a flow of a cryogenic fluid, comprising:
a flow member for the passage of a flow of cryogenic fluid therethrough;
a driver for vibrating the flow member;
one or more detectors configured to generate output signals corresponding to Coriolis deflections of the vibrating flow member with flow of cryogenic fluid therethrough; and,
wherein the flow member comprises at least 50wt% indium.

2. The Coriolis flow sensor according to claim 1, wherein the flow member comprises at least 99wt% indium.

3. The Coriolis flow sensor according to claim 1 or claim 2, wherein the flow member comprises one or more curved regions, or is substantially straight, in the absence of fluid flow and vibration.

4. The Coriolis flow sensor according to claim 3, wherein the flow member comprises at least one U-shaped portion.

5. The Coriolis flow sensor according to any preceding claim comprising more than one detector configured to generate output signals in response to Coriolis deflections of the vibrating flow member with flow of cryogenic fluid therethrough, optionally wherein a first detector is associated with, and/or located proximate to, a first portion of the flow member, and a second detector is associated with, and/or located proximate to, a second portion of the flow member, the second portion of the flow member not being the first portion of the flow member.

6. The Coriolis flow sensor according to any preceding claim wherein at least one detector is configured to sense the position, velocity or acceleration of the flow member.

7. The Coriolis flow sensor according to any preceding claim comprising more than one flow member.

8. The Coriolis flow sensor according to any preceding claim configured to determine one or more of whether or not a cryogenic fluid is flowing, whether or not a cryogenic fluid is flowing at or above a pre-determined rate, the magnitude of flow of cryogenic fluid and the direction of flow of cryogenic fluid.

9. The flow member for use in the Coriolis flow sensor of any preceding claim.

10. A fluid gauge comprising a Coriolis flow sensor in accordance with any of claims1 to 8, the fluid gauge being configured to determine a volume of fluid.

11. A cryogenic fluid transfer arrangement comprising a conduit for the transfer of cryogenic fluid and a Coriolis flow sensor according to any of claims 1 to 8, wherein the Coriolis sensor is configured to sense flow in the conduit for the transfer of cryogenic fluid.

12. A cryogenic fluid storage arrangement comprising a reservoir for the storage of cryogenic fluid, a conduit in fluid flow communication with the reservoir and a Coriolis flow sensor in accordance with any of claims 1 to 8, wherein the Coriolis flow sensor is configured to sense flow in the conduit.

13. A vehicle fuel storage arrangement comprising a fuel tank for the storage of cryogenic fluid, a conduit in fluid flow communication with the reservoir and a Coriolis flow sensor in accordance with any of claims 1 to 8, wherein the Coriolis flow sensor is configured to sense flow in the conduit.

14. A vehicle comprising the vehicle fuel storage arrangement in accordance with claim 13, and one or more engines or motors in fluid communication with the fuel tank for the storage of cryogenic fluid.

15. A method of sensing flow of a cryogenic fluid through a flow member, which flow member is in fluid communication with a source of cryogenic fluid such that, if cryogenic fluid flows, it flows through the flow member, the method comprising:
vibrating the flow member; and
sensing the movement of the flow member;
wherein the flow member comprises at least 50wt% indium.
